# EUROPEAN PATENT APPLICATION

(11) **EP 4 611 138 A1**
(43) Date of publication of application: **03.09.2025**
(21) Application number: 24207237.9
(22) Date of filing: 17.10.2024
(51) Int. Cl.: H01M 50/207, H01M 50/233, H01M 50/242, H01M 50/244, H01M 50/249

(54) **BATTERY BOX BEAM, BATTERY BOX AND BATTERY MODULE**

(30) Priority: 01.03.2024 CN 202420408473 U; 01.03.2024 CN 202410237163; 10.04.2024 WO PCT/CN2024/087031
(71) Applicant: Eve Energy Co., Ltd., Huizhou, Guangdong 516006 (CN)
(72) Inventor: HUANG, Liliang, Huizhou, Guangdong, 516006 (CN)
(74) Representative: Murgitroyd & Company

(57) **Abstract**

The present disclosure provides a battery box beam, a battery box (1), and a battery module. The battery box beam includes a body wall (7); a first beam wall (8) connected to one end of the body wall (7), and the first beam wall (8) compries a first pressure bearing section (81) disposed opposite to the body wall (7); and a second beam wall (9) connected to another end of the body wall (7), the second beam wall (9) includes a second pressure bearing section (91), and the second pressure bearing section (91) is disposed opposite to the body wall (7) and extends towards and partially overlaps with the first pressure bearing section (81), thereby meeting the requirements of light-weight and strength of the battery module.

## Description

### TECHNICAL FIELD

The present disclosure relates to a technical field of batteries, and in particular, to a battery box beam, a battery box, and a battery module.

### BACKGROUND

In related arts, a rolling process is proposed to form a closed structure by bending a plate, and then to form an anti-expansion beam by horizontal welding at the joint of two ends of the plate.

### SUMMARY

Since the welding surface (welding steam) is in the same direction as the extrusion force during the expansion of a battery cell, the welding steam between the two end walls of the anti-expansion beam is easy to crack and the welding surface is separated.

In order to improve the defects of the related arts, the present disclosure aims to provide a battery box beam, a battery box, and a battery module for improving the anti-expansion and extrusion performance of an anti-expansion beam.

In order to achieve the above purposes, in a first aspect, the present disclosure provides a battery box beam, which is a rolled steel beam, and the battery box beam includes:
a body wall;
a first beam wall connected to one end of the body wall, and the first beam wall compries a first pressure bearing section disposed opposite to the body wall; and
a second beam wall connected to another end of the body wall, the second beam wall compries a second pressure bearing section, and the second pressure bearing section is disposed opposite to the body wall and extends towards and partially overlaps with the first pressure bearing section.

In some embodiments of the present disclosure, the second pressure bearing section and the first pressure bearing section are fixedly connected at an overlapping portion.

In some embodiments of the present disclosure, the first pressure bearing section includes a first extension section and a second extension section connected with each other and extend in a same direction;
the second extension section is closer to the body wall than the first extension section;
the first extension section and the second extension section define a connecting portion; and
an end of the second pressure bearing section close to the first pressure bearing section is disposed at the connecting portion and connected with the second extension section.

In some embodiments of the present disclosure, the first pressure bearing section further includes a bending section, and the first extension section is connected with the second extension section through the bending section;
the bending section is bent from the first extension section towards the body wall;
the first extension section, and the second extension section and the bending section together define the connecting portion; and
an end of the second pressure bearing section close to the first pressure bearing section is disposed at the connecting portion and is welded and fixed to the second extension section.

In some embodiments of the present disclosure, the first extension section has a first surface away from the body wall, the second pressure bearing section has a second surface away from the body wall, and the first surface is coplanar with the second surface.

In some embodiments of the present disclosure, two ends of the bending section are in arc transition with the first extension section and the second extension section, respectively.

In some embodiments of the present disclosure, the first extension section has a first surface away from the body wall, the second pressure bearing section has a second surface away from the body wall, and the first surface is coplanar with the second surface.

In some embodiments of the present disclosure, the first beam wall further includes a first connecting section connected between the first pressure bearing section and the body wall;
the second beam wall further includes a second connecting section, the second connecting section is connected between the second pressure bearing section and the body wall, and is disposed opposite to the first connecting section; and
the body wall, the first connecting section, the first pressure bearing section, the second pressure bearing section, and the second connecting section enclose an inner cavity of the beam.

In some embodiments of the present disclosure, the first beam wall further includes a buffer section, and the buffer section is connected with an end of the first pressure bearing section close to the second pressure bearing section and extends towards the body wall; and
the buffer section is configured to support the first pressure bearing section and the second pressure bearing section in a case that the first pressure bearing section and the second pressure bearing section are subjected to a force, and the buffer section has a tendency to slide along the body wall.

In some embodiments of the present disclosure, the buffer section includes a supporting section and an abutting section, the supporting section is connected between the first pressure bearing section and the abutting section, and the abutting section is parallel to and connected with the body wall.

In some embodiments of the present disclosure, the abutting section abuts against the body wall, and the abutting section is configured to slide along the body wall in a case that the first pressure bearing section and the second pressure bearing section are subjected to a force, so as to butter an extrusion force.

In some embodiments of the present disclosure, the abutting section is fixedly connected with the body wall, and the abutting section is configured to change from a fixed connection to a sliding connection with the body wall in a case that the first pressure bearing section and the second pressure bearing section are subjected to a force, and to slide along the body wall to butter an extrusion force.

In some embodiments of the present disclosure, a connection strength between the abutting section and the body wall is less than a connection strength between the first pressure bearing section and the second pressure bearing section, and in a case that the first pressure bearing section and the second pressure bearing section are subjected to a force, a time node at which conntction between the abutting section and the body wall change from a fixed connection to a sliding connection is earlier than a time node at which the first pressure bearing section and the second pressure bearing section are separated.

In some embodiments of the present disclosure, the abutting section and the first pressure bearing section extend in an opposite direction.

In some embodiments of the present disclosure, an extension line of the supporting section and an extension line of the body wall form a first included angle, the extension line of the supporting section and an extension line of the second extension section form a second included angle, and the first included angle and the second included angle are offset and complementary to each other.

In some embodiments of the present disclosure, a wall thickness of the battery box beam ranges from 1 mm to 2 mm.

According to a second aspect, the present disclosure provides a battery box, wherein the battery box includes:
a rolling assembly enclosing a fixed space for fixing a cell module, the cell module has a tendency to expand along a first direction, the rolling assembly includes two anti-expansion beams disposed opposite to each other, the two anti-expansion beams are oppositely spaced along the first direction, and each of the two anti-expansion beams is the battery box beam according to the first aspect.

In some embodiments of the present disclosure, the first direction intersects with a second direction, and the rolling assembly further includes:
two rolled edge beams that are oppositely disposed in the second direction, two ends of each anti-expansion beam are connected with the two rolled edge beams respectively to define the fixed space.

In some embodiments of the present disclosure, both of the two rolled edge beams are the battery box beams according to the first aspect, the two rolled edge beams have a same thickness, and a thickness of each of the two rolled edge beams is smaller than a thickness of the anti-expansion beam.

In some embodiments of the present disclosure, the rolling assembly further includes:
at least one first cross beam and at least one second cross beam, both of the first cross beam and the second cross beam are located in the fixed space, the first cross beam and the second cross beam are cross-connected, two ends of the first cross beam are respectively welded to the two rolled edge beams, and two ends of the second cross beam are respectively connected to the two anti-expansion beams.

In some embodiments of the present disclosure, the two ends of the second cross beam are welded to two of the anti-expansion beams, respectively.

In some embodiments of the present disclosure, the battery box further includes a first frame, each of two ends of the first frame is respectively connected with one end of each of the two rolled edge beams, the first frame is spaced apart from one of the anti-expansion beams close to the first frame to define an anti-extrusion area, a plurality of anti-extrusion beams are disposed at intervals within the anti-extrusion area, and two ends of each of the plurality of anti-extrusion beams are respectively connected with the first frame and the anti-expansion beam close to the first frame.

In some embodiments of the present disclosure, the battery box further includes a second frame, the second frame is disposed opposite to the first frame, each of two ends of the second frame is respectively connected with each of the two rolled edge beams, and the second frame is disposed at a distance of greater than 5 mm from one of the anti-expansion beams close to the second frame.

In a third aspect, some embodiments of the present disclosure provide a battery module, which includes:
a bottom plate;
a bottom guard plate disposed on the bottom plate;
a liquid cooling plate disposed on the bottom guard plate;
the battery box according to the second aspect is disposed on the liquid cooling plate;
a plurality of cell modules disposed in a fixed space of the battery box;
a cell contact system disposed on the plurality of cell modules;
an insulating layer disposed on one side of the cell contact system away from the plurality of cell modules; and
a box cover disposed on the battery module, and the insulating layer is disposed between the box cover and the cell contact system.

In the embodiments of the present disclosure, the second pressure bearing section extends towards and partially overlaps with the first pressure bearing section, so that welding surface is located at the overlapping portion, and the welding surface is perpendicular to the direction of the extrusion force, which effectively avoids the risk of separation due to the extrusion force on the welding surface. Further, the first pressure bearing section and the second pressure bearing section overlap in the direction of resisting the extrusion force, thereby enhancing the ability to resist extrusion. In detail, firstly, the structure of the battery box beam is formed by connecting the body wall, the first beam wall and the second beam wall to each other. Secondly, the first pressure bearing section and the second pressure bearing section are disposed opposite to the body wall. That is, the first pressure bearing section and the second pressure bearing section are disposed on the same side of the body wall. Thirdly, the first pressure bearing section extends towards and partially overlaps with the second pressure bearing section, thereby improving the ability of the battery box beam to bear the extrusion force in the direction of the first pressure bearing section towards the body wall. The overlapping surface of the first pressure bearing section and the pressure bearing section is a welding surface. The extension direction of the welding surface in the present disclosure is different from that of the welding surface in the related arts. The welding surface in the present disclosure is not parallel to the extrusion force, which can effectively reduce the risk of separation of the first pressure bearing section and the second pressure bearing section due to the extrusion force, and the strength of the extrusion force can also be improved due to overlapping of the first pressure bearing section and the second pressure bearing section.

### BRIEF DESCRIPTION OF THE DRAWINGS

In order to more clearly describe the technical solutions in the specific embodiments of the present application or in the prior art, hereinafter, the appended drawings used for describing the specific embodiments or the prior art will be briefly introduced. Apparently, the appended drawings described below are only directed to some embodiments of the present disclosure, rather than limiting the present disclosure.

In the drawings:
FIG. 1 is a schematic cross section of a battery box beam of related arts mentioned in the background.
FIG. 2 is a schematic cross section of a battery box beam according to some embodiments of the present disclosure.
FIG. 3 is a perspective view of a battery box according to some embodiments of the present disclosure.
FIG. 4 is an exploded perspective view of FIG. 3.
FIG. 5 is a top view of a battery box according to some embodiments of the present disclosure.
FIG. 6 is an enlarged schematic view of the mounting member in FIG. 3.
FIG. 7 is a perspective view of a battery module according to some embodiments of the present disclosure.
FIG. 8 is an exploded perspective view of FIG. 7.

### List of reference signs:

1-battery box; 11-rolling assembly; 111-rolled edge beam; 112-anti-expansion beam; 113-first cross beam; 114-second cross beam; 115-fixed space; 12-first frame; 121-anti-extrusion area; 13-anti-extrusion beam; 14-second frame; 15-mounting member; 151-first mounting beam; 152-second mounting beam; 1521-hole; 153-sleeve; 154-anti-rust gasket; 2-bottom plate; 3-bottom guard plate; 4-liquid cooling plate; 5- cell module; 6-cell contact system; 7-body wall; 8-first beam wall; 81-first pressure bearing section; 811-first extension section; 812-second extension section; 813-first surface; 814-bending section; 82-first connecting section; 83-buffer section; 831-supporting section; 832-abutting section; 9-second beam wall; 91-second pressure bearing section; 911-second surface; 92-second connecting section.

### DETAILED DESCRIPTION

Hereinafter, technical solution in embodiments of the present disclosure will be clearly and completely described with reference to the accompanying drawings in embodiments of the present disclosure. Obviously, the described embodiments are part of, but not all of, the embodiments of the present disclosure. All the other embodiments, obtained by a person with ordinary skill in the art on the basis of the embodiments in the present disclosure without expenditure of creative labor, belong to the protection scope of the present disclosure.

In the present disclosure, the term "exemplary" is used to mean "serving as an example, instance, or illustration". The follow description is given to enable any skilled in the art to realize and use this disclosure. In the following description, details are set forth for purposes of explanation.

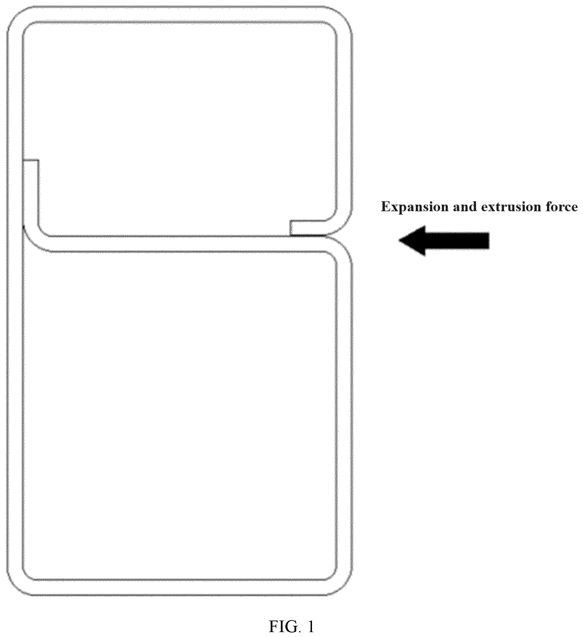

Referring to FIG. 1, which shows a schematic cross section of a battery box beam of related arts mentioned in the background. It can be seen from FIG. 1 that the connection surface of the battery box beam on the right side is parallel to the expansion and extrusion force at the connecting portion. As a result, in a case that the expansion and extrusion force is excessively large, there is a risk of separation at the connecting portion of both ends of the battery box beam.

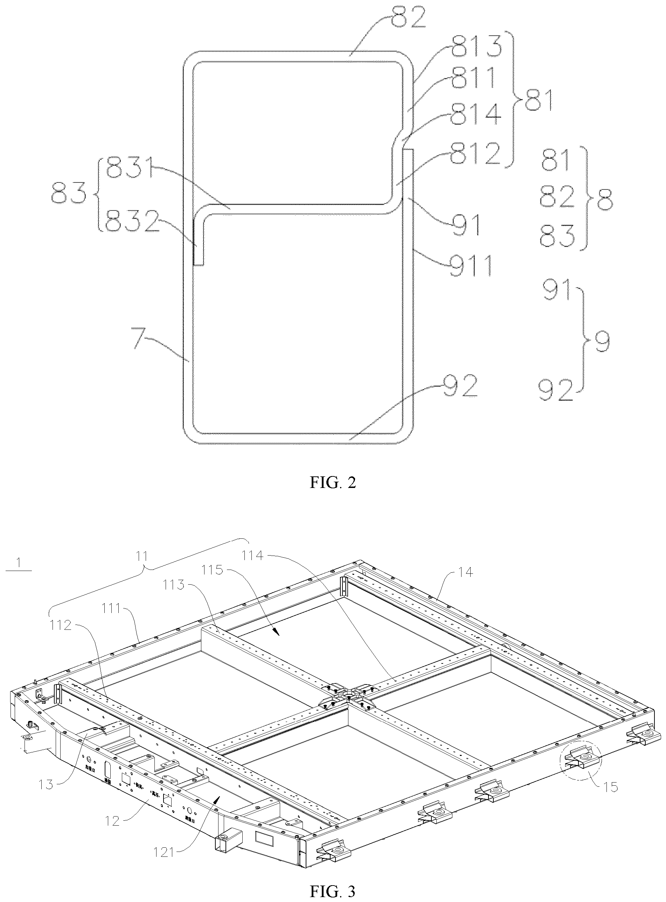

To this end, referring to FIG. 2, some embodiments of the present disclosure provide a battery box beam, which includes:
a body wall 7;
a first beam wall 8 connected to one end of the body wall 7, and the first beam wall 8 includes a first pressure bearing section 81 disposed opposite to the body wall 7; and
a second beam wall 9 connected to another end of the body wall 7, the second beam wall 9 compries a second pressure bearing section 91, and the second pressure bearing section 91 is disposed opposite to the body wall 7 and extends towards and partially overlaps with the first pressure bearing section 81.

Further, the second pressure bearing section 91 and the first pressure bearing section 81 are fixedly connected at an overlapping portion.

According to the technical solutions provided in the present disclosure, the second pressure bearing section 91 extends towards and partially overlaps with the first pressure bearing section 81, so that welding surface is located at the overlapping portion, and the welding surface is perpendicular to the direction of the extrusion force, which effectively avoids the risk of separation due to the extrusion force on the welding surface. Further, the first pressure bearing section 81 and the second pressure bearing section 91 overlap in the direction of resisting the extrusion force, thereby enhancing the ability to resist extrusion. In detail, firstly, the structure of the battery box beam is formed by connecting the body wall 7, the first beam wall 8 and the second beam wall 9 to each other. Secondly, the first pressure bearing section 81 and the second pressure bearing section 91 are disposed opposite to the body wall 7. That is, the first pressure bearing section section 81 and the second pressure bearing section 91 are disposed on the same side of the body wall 7. Thirdly, the first pressure bearing section 81 extends towards and partially overlaps with the second pressure bearing section 91, thereby improving the ability of the battery box beam to bear the extrusion force in the direction of the first pressure bearing section 81 towards the body wall 7. The overlapping surface of the first pressure bearing section 81 and the pressure bearing section 91 is a welding surface. The extension direction of the welding surface in the present disclosure is different from that of the welding surface in the related arts. The welding surface in the present disclosure is not parallel to the extrusion force, which can effectively reduce the risk of separation of the first pressure bearing section 81 and the second pressure bearing section 91 due to the extrusion force, and the strength of the extrusion force can also be improved due to overlapping of the first pressure bearing section 81 and the second pressure bearing section 91.

In some embodiments, the first pressure bearing section 81 includes a first extension section 811 and a second extension section 812 that are connected with each other and extend in the same direction. The second extension section 812 is closer to the body wall 7 than the first extension section 811. The first extension section 811 and the second extension section 812 together define a connecting portion. An end of the second pressure bearing section 91 close to the first pressure bearing section 81 is disposed at the connecting portion, and is connected with the second extension section 812. The first extension section 811 and the second extension section 812 are connected in an arc shape and are formed by integral bending, which is beneficial to improving the strength of the connecting portion, and the bending transition is more rounded, so as to avoid the fracture of the connecting portion caused by excessive bending angle. The second extension section 812 is closer to the body wall 7 than the first extension section 811, which means that a fault is formed at the first extension section 811 and the second extension section 812. The fault can be used as an overlapping position of the second pressure bearing section 91 and the first pressure bearing section 81, thereby providing the overlapping position for the second pressure bearing section 91, so as to avoid the risk of damaging the cell module 5 caused by the formation of an obvious protrusion on one side of the battery box beam due to the overlapping of the first pressure bearing section 81 and the second pressure bearing section 91 at the connecting portion.

Further, the first pressure bearing section 81 further includes a bending section 814, and the first extension section 811 is connected with the second extension section 812 through the bending section. The bending section 814 is bent from the first extension section 811 towards the body wall 7, so that the second extension section 812 is closer to the body wall 7 than the first extension section 811. The first extension section 811, and the second extension section 812 and the bending section 814 together define the connecting portion. An end of the second pressure bearing section 91 close to the first pressure bearing section 81 is disposed at the connecting portion and is welded and fixed to the second extension section 812. The first extension section 811 and the second extension section 812 are in an arc transition and are formed by integral bending, which is beneficial to improving the strength of the connecting portion, and the bending transition is more rounded, so as to avoid the fracture of the connecting portion caused by excessive bending angle. The second extension section 812 is closer to the body wall 7 than the first extension section 811, which means that a fault is formed at the first extension section 811 and the second extension section 812. The fault can be used as an overlapping position of the second pressure bearing section 91 and the first pressure bearing section 81, thereby providing the overlapping position for the second pressure bearing section 91, so as to avoid the risk of damaging the cell module 5 caused by the formation of an obvious protrusion on one side of the battery box beam due to the overlapping of the first pressure bearing section 81 and the second pressure bearing section 91 at the connecting portion.

Further, the first extension section 811 has a first surface 813 away from the body wall 7, the second pressure bearing section 91 has a second surface 911 away from the body wall 7, and the first surface 813 is coplanar with the second surface 911. The first surface 813 and the second surface 911 are coplanar, so that the flatness of the side of the battery box beam away from the body wall 7 can be improved, and the problem of uneven stress on the cell module 5 due to the protrusion on the side surface of the battery box beam can be avoided. Preferably, the bending section 814 has a first length in the vertical direction extending from the first pressure bearing section 81 towards the body wall 7. Along the vertical direction from the first pressure bearing section 81 towards the wall 7, the overlapping thickness of the second extension section 812 and the second pressure bearing section 82 is refered as a first thickness. The first thickness is equal to the first length.

Furthermore, two ends of the bending section 814 are in arc transition with the first extension section 811 and the second extension section 812, respectively. The arc transition can effectively prevent the first pressure bearing section 81 from being damaged due to excessive bending angle when being bent. In addition, during use, the first pressure bearing section 81 with an arc transition also has a longer service lifes than the first pressure bearing section 81 with bent right angle connection.

In some embodiments, the first beam wall 8 further includes a first connecting section 82 connected between the first pressure bearing section 81 and the body wall 7. The second beam wall 9 further includes a second connecting section 92, the second connecting section 9 is connected between the second pressure bearing section 91 and the body wall 7, and is disposed opposite to the first connecting section 82. The body wall 7, the first connecting section 82, the first pressure bearing section 81, the second pressure bearing section 91, and the second connecting section enclose an inner cavity of the beam. The first beam wall 8, the second beam wall 9 and the body wall 7 are circumferentially connected to each other, so that the cross section of the battery box beam has a rectangular structure. It should be noted that the connection between the body wall 7 and the first connecting section 82 and the connection between the body wall 7 and the second connecting section 92 are integrally formed by bending. The connection between the first connecting section 82 and the first pressure bearing section 81 is also formed by integral bending. The connection between the second connecting section 92 and the second pressure bearing section 91 is formed by integral bending as well. The first pressure bearing section 81 and the second pressure bearing section 91 are overlapped and fixed by welding. Through such connection, the battery box beam has a hollow structure, and the opening process is omitted, thereby achieving the purpose of reducing the weight of the box beam.

In some embodiments, the first beam wall 8 further includes a buffer section 83. The buffer section 83 is connected with an end of the first pressure bearing section 81 close to the second pressure bearing section 91 and extends towards the body wall 7. The buffer section 83 is configured to support the first pressure bearing section 81 and the second pressure bearing section 91 in a case that the first pressure bearing section 81 and the second pressure bearing section 91 are subjected to a force, and the buffer section 83 has a tendency to slide along the body wall 7. In a case that the buffer section 83 is subjected to excessive extrusion force, it will slide along the body wall 7 to buffer the extrusion force. The connection between the buffer section 83 and the first pressure bearing section 81 is also formed by integral bending. Both ends of the buffer section 83 are connected to the body wall 7 and the first pressure bearing section 81, respectively, so that the buffer section 83 can support the first beam wall 8, the second beam wall 9, and the body wall 7, thereby improving the ability of the battery box beam to bear the extrusion force. Moreover, the buffer section 83 has a tendency to slide along the body wall 7. In a case that the extrusion force is too large, the buffer section 83 will deform and slide along the body wall 7. Based on the force of restoring deformation, the buffer section 83 plays a role in buffering the extrusion force and enhancing the force against the extrusion force.

Further, the buffer section 83 includes a supporting section 831 and an abutting section 832. The supporting section 831 is connected between the first pressure bearing section 81 and the abutting section 832. The abutting section 832 is parallel to and connected with the body wall 7, and the connection means can be overlapping, abutting, welding, or the like. The supporting section 831 plays a role of supporting to enhance the strength of the battery box beam. The abutting section 832 is parallel to and abuts against the body wall 7, so that the contact area between the abutting section 832 and the body wall 7 can be increased, thereby avoiding excessive extrusion force of the abutting section 832 on the body wall 7 due to too small contact area. Furthermore, in case that the extrusion force is too large, the supporting section 831 will transmit the extrusion force to the abutting section 832, and the abutting section 832 will move along the body wall 7 to cause the supporting section 831 to be deformed and inclined, thereby buffering the extrusion force.

In some embodiments, the abutting section 832 is fixedly connected with the body wall 7. The abutting section 832 is configured to change from a fixed connection to a sliding connection with the body wall 7 in a case that the first pressure bearing section 81 and the second pressure bearing section 82 are subjected to a force, and to slide along the body wall to butter an extrusion force. In these embodiments, the abutting section 832 and the body wall 7 are fixedly connected, such as by welding. The connection is changed from a fixed connection to a sliding connection means that when the beam is subjected to excessive extrusion force, the fixed connection between the abutting section 832 and the body wall 7, such as the welding, will tear, resulting in welding failure. At this time, the abutting section 832 can also slide along the body wall 7, thereby further playing a buffering role and forming secondary protection.

Further, the connection strength between the abutting section 832 and the body wall 7 is less than the connection strength between the first pressure bearing section 81 and the second pressure bearing section 82. In a case that the first pressure bearing section 81 and the second pressure bearing section 82 are subjected to a force, a time node at which conntction between the abutting section 832 and the body wall 7 change from a fixed connection to a sliding connection is earlier than a time node at which the first pressure bearing section 81 and the second pressure bearing section 82 are separated. By limiting the connection strength, and limiting the time node at which conntction between the abutting section 832 and the body wall 7 change from a fixed connection to a sliding connection is earlier than a time node at which the first pressure bearing section 81 and the second pressure bearing section 82 are separated, it can be ensured that the abutting section 832 slides preferentially when the battery box beam is subjected to a large extrusion force, which plays a buffering role, so as to prevent the first pressure bearing section 81 and the second pressure bearing section 82 from separating when they are subjected to extrusion force, causing damage to the box beam.

In some embodiments, the abutting section 832 and the first pressure bearing section 81 extend in an opposite direction, so that the abutting section 832 is more sensitive to the extrusion force. When subjected to a larger extrusion force, the abutting section 832 can move along the body wall 7 to cause the supporting section 831 to deform and act as a cushion.

It should be noted that the battery box beam is made of steel profile, the specific material is 780DP steel profile, and the production process is a roll pressing process. The wall thickness of the battery box beam ranges from 1 mm to 2 mm. Compared with the aluminum profiles, it is beneficial to reduce costs and improve strength.

In some embodiments, an extension line of the supporting section 831 and an extension line of the body wall 7 form a first included angle. The extension line of the supporting section 831 and an extension line of the second extension section 812 form a second included angle. The first included angle and the second included angle are offset and complementary to each other. By limiting the included angles as offset and complementary to each other, the supporting section 831 is inclined in the second direction, which is beneficial to assisting the sliding of the abutting section 832, thus playing a better buffering role.

Referring to FIGs. 2 to 6, the present disclosure further provides a battery box 1. The battery box 1 includes:
a rolling assembly 11 enclosing a fixed space 115 for fixing a cell module 15, the cell module 5 has a tendency to expand along a first direction. The rolling assembly 11 includes two anti-expansion beams 112 disposed opposite to each other. The two anti-expansion beams 112 are oppositely spaced along the first direction, and each of the two anti-expansion beams 112 is the battery box beam as described in the first aspect.

The battery box 1 is provided with the battery box beam described in any one of the foregoing embodiments as the anti-expansion beam 112. The anti-expansion beam 112 is configured to support and butter the expansion and extrusion force, thereby effectively improving the anti-expansion ability of the battery box. The specific derivation process of the beneficial effects can be found in the aforementioned embodiments of the battery box beam, details are not described herein.

In some embodiments, in the battery box 1 the first direction intersects with a second direction. The rolling assembly 11 further includes:
two rolled edge beams 111 that are oppositely disposed in the second direction, two ends of each anti-expansion beam 112 are connected with the two rolled edge beams 111 respectively to define the fixed space 115.

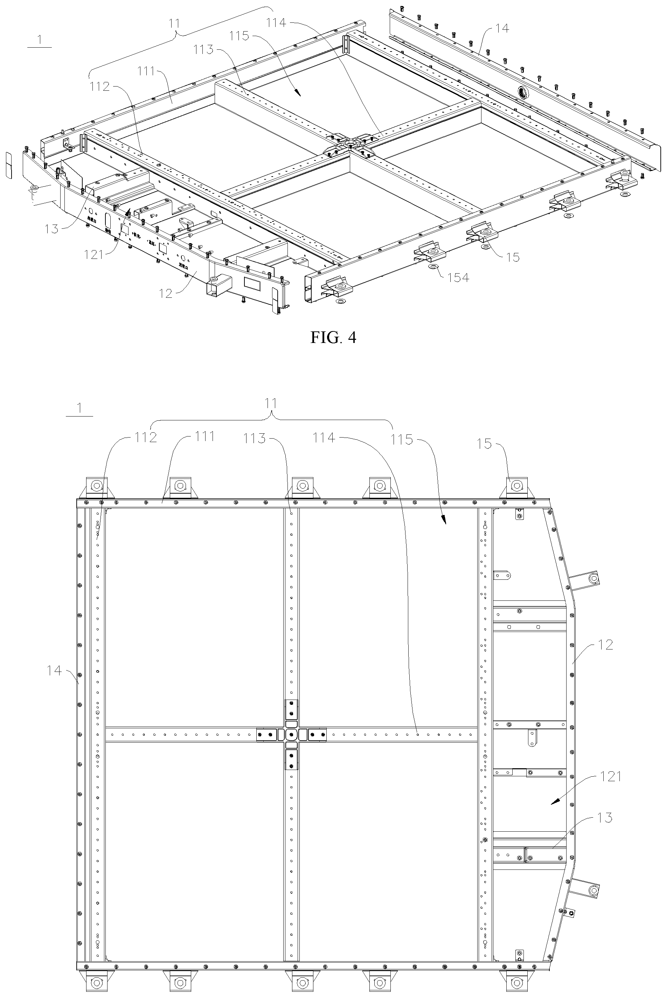

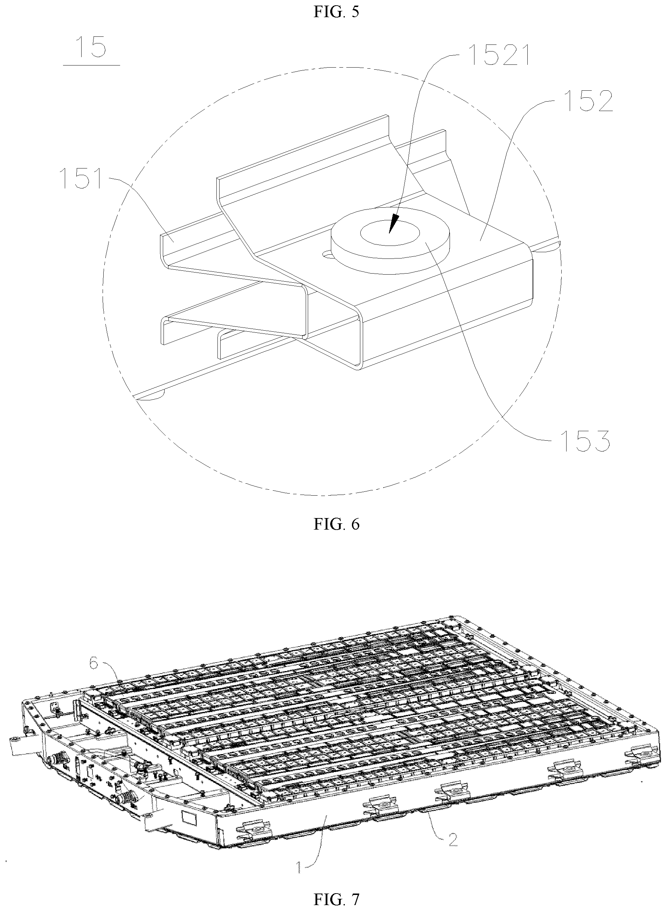

Further, referring to FIGs. 4 and 5, both of the two rolled edge beams 111 are the battery box beams as described in any one of the preceding embodiments. The two rolled edge beams 111 have a same thickness, and a thickness of each of the two rolled edge beams 111 is smaller than a thickness of the anti-expansion beam 112. By using the structure of battery box beam, the ability of battery box 1 to resist the expansion and extrusion force of battery cell can be enhanced. Moreover, the limitation that the thickness of the rolled edge beam 111 is smaller than that of the anti-expansion beam 112 is mainly based on the main expansion direction of the battery cell. That is, the main expansion direction of the battery cell is the first direction. It should also be noted that the thickness refers to the sum of the wall thickness of the body wall 7 of the battery box beam itself, the wall thickness of the pressure bearing section disposed opposite to the body wall 7, and the distance between the pressure bearing section and the body wall 7.

In some embodiments, the roll assembly 11 further includes:
at least one first cross beam 113 and at least one second cross beam 114, both of the first cross beam 113 and the second cross beam 114 are located in the fixed space 115, the first cross beam 113 and the second cross beam 114 are cross-connected, two ends of the first cross beam 113 are respectively welded to the two rolled edge beams 111, and two ends of the second cross beam 114 are respectively connected to the two anti-expansion beams 112.

By connecting the two rolled edge beam 111 and the two anti-expansion beams 112 to each other, a fixed space 115 is enclosed, whixh is mainly used to mount and fix the cell module 5, so that the enclosed fixed space 115 can accommodate the cell module 5 with a large size. In some embodiments, by disposing the first cross beam 113 and the second cross beam 114 in the fixed space 115, and cross-connecting the first cross beam 113 and the second cross beam 114, the fixed space 115 is divided into a plurality of fixed sub-spaces, so that a plurality of cell modules 5 can be mounted and fixed in the fixed space 115. Further, in case that each cell module 5 expands, each expanded cell module 5 is subjected to an independent fixed extrusion force to inhibit expansion of each cell module 5. Moreover, the plurality of cell modules 5 are disposed adjacent to each other and are isolated by cross beams. That is, when the cell modules 5 are fixedly mounted, they will share the cross beams, and partial expansion and extrusion forces of the two adjacent cell modules 5 will be offset by acting on the same cross beam, thus indirectly enhancing the ability of the rolling assembly 11 to inhibit the expansion of the cell modules 5.

Further, the two ends of the second cross beam 114 are welded to two of the anti-expansion beams 112, respectively to improve the connection firmness.

It should be noted that the frame structure formed by connecting the rolled edge beam 111 and the anti-expansion beam 112 may be a rectangular, a rhombic, or other closed quadrilaterals. Similarly, the fixed space 115 may be a rectangular, a rhombic, or other closed quadrilaterals, which is not limited and is mainly adjusted according to the structure of the cell module 5. Since the common structure of the cell modules 5 is rectangular, both the frame structure and the fixed space 115 are preferably rectangular in this embodiment. In this embodiment, one first cross beam 113 and one second cross beam 114 are respectively used and cross-connected to divide the fixed space 115 into four fixed sub-spaces. In other embodiments, two first cross beams 113 and two second cross beams 114 may be used and cross-connected,thus defining more fixed sub-spaces for placing more cell modules 5.

In addition, the rolled edge beam 111, the anti-expansion beam 112, the first cross beam 113 and the second cross beam 114 are all rolled by a rolling process, and are all hollow steel plates with a thickness ranging from 1.0 mm to 2.0 mm, thereby meeting the requirements of light-weight battery modules. Moreover, the cross sections of the rolled edge beam 111, the first cross beam 113, the second cross beam 114 and the anti-expansion beam 112 are all double E shaped, so as to improve the ability of each beam to bear the expansion and extrusion force of the cell module 5.

In some embodiments, referring to FIGs. 4 and 5, the battery box 1 further includes a first frame 12. Each of two ends of the first frame 12 is respectively connected with one end of each of the two rolled edge beams 111, and the first frame 12 is spaced apart from one of the anti-expansion beams 112 close to the first frame 12 to define an anti-extrusion area 121. A plurality of anti-extrusion beams 13 are disposed at intervals within the anti-extrusion area 121, and two ends of each of the plurality of anti-extrusion beams 13 are respectively connected with the first frame 12 and the anti-expansion beam 112 close to the first frame 12.

The anti-expansion beam 112 instead of the frame is used to bear the extrusion force of the expansion of the cell modules 5, and the plurality of anti-extrusion beams 13 are disposed in the anti-extrusion area 121, so that the effect of inhibiting the expansion of the cell modules 5 can be further improved. In detail, since the cell module 5 has a tendency to expand in the first direction, the technical solutions proposed in the present disclosure are mainly to form the fixed spaces 115 by using the rolling assembly 11, in this way, the anti-extrusion areas 121 are formed between the first frame 12 and the anti-expansion beam 112, so that the cell modules 5 can be mounted in the fixed space 115 without directly contacting the first frame 12. That is, the expansion and extrusion force of the cell modules 5 does not directly act on the first frame 12, thereby effectively preventing the first frame 12 from being deformed. Furthermore, anti-extrusion beams 13 are provided in the anti-expansion beam 121, and the the rolling assembly 11 is connected with the the first frame 12 through anti-extrusion beams 13, in this way, the first frame 12 can not only enhance the strength of the rolling assembly 11 to resist the expansion and extrusion force to a certain extent, but also prevent the first frame 12 from being deformed due to direct bearing expansion and extrusion force. Further, the anti-extrusion beam 13 can also enhance the strength of the rolling assembly 11.

In some embodiments, the battery box 1 further includes a second frame 14. Each of two ends of the second frame 14 is respectively connected with each of the two rolled edge beams 111, and the second frame 14 is disposed at a distance of greater than 5 mm from one of the anti-expansion beams 112 close to the second frame 12. Since the expansion range of the cell module 5 is from 1 mm to 5 mm, the space between the second frame 14 and the anti-expansion beam 112 close to the second frame 14 can be set to be 5 mm or more, which can effectively prevent the anti-expansion beam 112 from moving or deforming to affect the second frame 14. Specifically, both ends of each rolled edge beam 111 extend in the second direction and are respectively located outside two anti-expansion beams 112, so that when the first frame 12 is connected with the rolled edge beam 111, the anti-extrusion areas 121 can be formed between the first frame 12 and the anti-expansion beam 112; and when the second frame 14 is connected with the rolled edge beam 111, the second frame 14 is spaced apart from the anti-expansion beam 112. By setting the distance between the second frame 14 and the anti-expansion beam 112 to be greater than 5 mm, it can be ensured that when the anti-expansion beam 112 is displaced, the second frame 14 will not be affected by the displacement, thereby avoiding affecting the air tightness of the second frame 14.

It should be noted that, in this embodiment, both the first frame 12 and the second frame 14 are sheet metal stamping members. Compared with the rolling members, the sheet metal stamping members can reduce the weight and the opening cost due to the reasons that only mold is needed to open holes for sheet metal stamping members, while laser cutting roller pressing parts is needed for the rolling members.

Furthermore, with respect to the first direction and the second direction, the first direction is a direction in which the cell module 5 expands, and the first direction intersects with the second direction, preferably the first direction is perpendicular to the second direction.

Further, referring to FIGs. 2 and 5, the rolled edge beam 111, the anti-expansion beam 112, the first cross beam 113, and the second cross beam 114 are all hollow steel plates with a thickness of 1.0 mm to 2.0 mm. The rolled edge beam 111, the anti-expansion beam 112, the first cross beam 113 and the second cross beam 114 are all formed by bending steel plates, and the hollow structure formed by bending is a through hole. The buffer sections 83 are respectively provided in the through holes of the rolled edge beam 111, the anti-expansion beam 112, the first cross beam 113, and the second cross beam 114, respectively. The buffer section 83 provided in the rolled edge beam 111 is integrally formed with the rolled edge beam 111, and may be formed by directly bending a steel plate. The buffer section 83 provided in the anti-expansion beam 112 is integrally formed with the anti-expansion beam 112, and may be formed by directly bending a steel plate. The buffer section 83 provided in the first cross beam 113 is integrally formed with the first cross beam 113, and may be formed by directly bending a steel plate. The buffer section 83 provided in the second cross beam 114 is integrally formed with the second cross beam 114, and may be formed by directly bending a steel plate. After formed by bending, the cross sections of the rolled edge beam 111, the anti-expansion beam 112, the first cross beam 113 and the second cross beam 114 are all double E shaped. Compared with a completely hollow beam structure, the beam structure with a double E shaped cross section has higher strength and can better bear the extrusion force. It should be noted that, although the cross sections of the rolled edge beam 111 and the cross sections of the cross beams are all double E shaped, the area of each cross section of the rolled edge beam 111 may be different from the area of each cross section of the cross beams to form a size difference, and the size can be selected according to actual requirements. Moreover, the double E shape mainly refers to a shape with a cross section similar to a double E shape when viewed as a whole, but the cross section of the rolled edge beam 111 and the cross section of the cross beam can be exactly the same double E shape or different double E shapes, and there is no restriction.

Specifically, the plate thickness of the rolled edge beam 111 ranges from 1.2 mm to 1.5 mm, and in this, the plate thickness is preferably 1.3 mm. The plate thickness of the anti-expansion beam 112 ranges from 1.5 mm to 2.0 mm, and in this embodiment, the thickness is preferably 1.7 mm. Both the plate thickness of the first cross beam 113 and the plate thickness of the second cross beam 114 range from 1.5 mm to 2.0 mm, and in this embodiment, the plate thickness is preferably 1.7 mm. By limiting the plate thicknesses of the rolled edge beam 111, the anti-expansion beam 112 and the cross beams within the above-mentioned corresponding thickness range, it can only ensure the strength of the rolled edge beam 111 and the cross beams, but also avoid excessive difficulty in roll forming.

In some embodiments, referring to FIGs. 3 and 6, a plurality of mounting members 15 are provided outerside of the rolled edge beam 111, the outerside refers to the side away from the fixed space 115. The plurality of mounting members 15 are disposed at intervals in the second direction for fixing the battery box 1 to other external structures. Compared with fixing the battery box 1 to an external structure directly by using the rolled edge beam 111 and the anti-expansion beam 112, the mounting members 15 can isolate the influence of the external structure on the rolled edge bea111 and the anti-expansion beam 112 to a certain extent, and protect the internal structure of the battery box 1 from unnecessary mechanical stress and damage.

Further, the mounting member 15 includes a first mounting beam 151, a second mounting beam 152, and a sleeve 153. The first mounting beam 151 is fixed on the outerside of the rolled edge beam 111, and a side of the first mounting beam 151 away from the rolled edge beam 111 is embedded in the second mounting beam 152 to fix the second mounting beam 152. Specifically, one side of the second mounting beam 152 is in the form of an opening, one side of the first mounting beam 151 is embedded in the second mounting beam 152 through the opening, and the other side of the first mounting beam 151 extends to the outside of the second mounting beam 152 and is welded and fixed to the rolled edge beam 111. One side of the first mounting beam 151 extending into the second mounting beam 152 is spaced from an inner side of the second mounting beam 152 to define a space through which the sleeve 153 can pass through. One side of the second mounting beam 152 facing towards the rolled edge beam 111 is fixedly connected with the rolled edge beam 111 by welding or bonding, and welding is adopted in this embodiment. The second mounting beam 152 is provided with a hole 1521, and the sleeve 153 is fixed on the second mounting beam 152 through the hole 1521.

Furthermore, referring to FIGs. 3 and 6, the mounting member 15 further includes an anti-rust gasket 154. In some embodiments, the anti-rust gasket 154 is a stainless steel sheet. The anti-rust gasket 154 is fixed on the side of the second mounting beam 152 away from the sleeve 153 and is coaxially connected with the hole 1521. When a bolt passes through the sleeve 153, it can coaxially pass through the anti-rust gasket 154 and connect with the nut on one side of the anti-rust gasket 154. In this embodiment, the anti-rust gasket 154 and the second mounting beam 152 are connected and fixed by welding. When the battery module is mounted and locked with a vehicle, and the bolt and nut rotate in coordination, the anti-rust gasket 154 can effectively reduce the wear of the nut on the surface of the second mounting beam 152 and reduce the consumption of the electrophoretic anti-corrosion layer on the surface of the second mounting beam 152. Moreover, even if the electrophoretic anti-corrosion layer of the anti-rust gasket 154 is completely consumed, the surface of the anti-rust gasket 154 will not rust because it is made of stainless steel, thereby effectively ensuring the anti-corrosion performance of the battery module.

Referring to FIGs. 7 and 8, the present disclosure further provides a battery module, which includes:
a bottom plate 2;
a bottom guard plate 3 disposed on the bottom plate 2;
a liquid cooling plate 4 disposed on the bottom guard plate 3;
the battery box 1 according to any one of the preceding embodiments is disposed on the liquid cooling plate 4;
a plurality of cell modules 5 disposed in a fixed space 115 of the battery box 1;
a cell contact system 6 disposed on the plurality of cell modules 5;
an insulating layer disposed on one side of the cell contact system 6 away from the plurality of cell modules 5; and
a box cover disposed on the battery module, and the insulating layer is disposed between the box cover and the cell contact system 6.

It should be noted that since the battery module includes the battery box 1 in any one of the above embodiments, the battery module has beneficial effects similar to those of the battery boxl. The specific derivation process of the beneficial effects can be found in the aforementioned embodiments of the battery box 1, details are not described herein.

Meanwhile, certain terminology has been used to describe embodiments of the present disclosure. For example, the terms "one embodiment", "an embodiment", and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various parts of this specification are not necessarily all referring to the same embodiment. In addition, some features, structures, or features in the present disclosure of one or more embodiments may be appropriately combined.

In some embodiments, the numbers expressing quantities or properties used to describe and claim certain embodiments of the present disclosure are to be understood as being modified in some instances by the term "about", "approximate", or "substantially." For example, "about", "approximate", or "substantially" may indicate ±% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the present disclosure are approximations, the numerical values set forth in the specific examples are reported as precisely as practicable.

## Claims

1. A battery box beam, **characterized in that** the battery box beam is a rolled steel beam, and the battery box beam compries:
a body wall (7);
a first beam wall (8) connected to one end of the body wall (7), and the first beam wall (8) compries a first pressure bearing section (81) disposed opposite to the body wall (7); and
a second beam wall (9) connected to another end of the body wall (7), the second beam wall (9) compries a second pressure bearing section (91), and the second pressure bearing section (91) is disposed opposite to the body wall (7) and extends towards and partially overlaps with the first pressure bearing section (81).

2. The battery box beam according to claim 1, **characterized in that** the second pressure bearing section (91) and the first pressure bearing section (81) are fixedly connected at an overlapping portion.

3. The battery box beam according to claim 2, **characterized in that** the first pressure bearing section (81) comprises a first extension section (811) and a second extension section (812) connected with each other and extend in a same direction;
the second extension section (812) is closer to the body wall (7) than the first extension section (811);
the first extension section (811) and the second extension section (812) define a connecting portion; and
an end of the second pressure bearing section (91) close to the first pressure bearing section (81) is disposed at the connecting portion and connected with the second extension section (812).

4. The battery box beam according to claim 3, **characterized in that** the first pressure bearing section (81) further comprises a bending section (814), and the first extension section (811) is connected with the second extension section (812) through the bending section (814);
the bending section (814) is bent from the first extension section (811) towards the body wall (7);
the first extension section (811), and the second extension section (812) and the bending section (814) together define the connecting portion; and
an end of the second pressure bearing section (91) close to the first pressure bearing section (81) is disposed at the connecting portion and is welded and fixed to the second extension section (812) ;
preferably two ends of the bending section (814) are in arc transition with the first extension section (811) and the second extension section (812), respectively.

5. The battery box beam according to claim 4, **characterized in that** the first extension section (811) has a first surface (813) away from the body wall (7), the second pressure bearing section (91) has a second surface (911) away from the body wall (7), and the first surface (813) is coplanar with the second surface (911).

6. The battery box beam according to claim 1, **characterized in that** the first beam wall (8) further comprises a first connecting section (82) connected between the first pressure bearing section (81) and the body wall (7);
the second beam wall (9) further comprises a second connecting section (92), the second connecting section (92) is connected between the second pressure bearing section (91) and the body wall (7), and is disposed opposite to the first connecting section (82); and
the body wall (7), the first connecting section (82), the first pressure bearing section (81), the second pressure bearing section (91), and the second connecting section (92) enclose an inner cavity of the beam;
preferably a wall thickness of the battery box beam ranges from 1 mm to 2 mm.

7. The battery box beam according to any one of claims 1 to 6, **characterized in that** the first beam wall (8) further comprises a buffer section (83), and the buffer section (83) is connected with an end of the first pressure bearing section (81) close to the second pressure bearing section (91) and extends towards the body wall (7); and
the buffer section (83) is configured to support the first pressure bearing section (81) and the second pressure bearing section (91) in a case that the first pressure bearing section (81) and the second pressure bearing section (91) are subjected to a force, and the buffer section (83) has a tendency to slide along the body wall (7);
preferably the buffer section (83) comprises a supporting section (831) and an abutting section (832), the supporting section (831) is connected between the first pressure bearing section (81) and the abutting section (832), and the abutting section (832) is parallel to and connected with the body wall (7); and
preferably the abutting section (832) abuts against the body wall (7), and the abutting section (832) is configured to slide along the body wall (7) in a case that the first pressure bearing section (81) and the second pressure bearing section (91) are subjected to a force, so as to butter an extrusion force; or, the abutting section (832) is fixedly connected with the body wall (7), and the abutting section (832) is configured to change from a fixed connection to a sliding connection with the body wall (7) in a case that the first pressure bearing section (81) and the second pressure bearing section (91) are subjected to a force, and to slide along the body wall (7) to butter an extrusion force.

8. The battery box beam according to claim 7, **characterized in that** a connection strength between the abutting section (832) and the body wall (7) is less than a connection strength between the first pressure bearing section (81) and the second pressure bearing section (91), and in a case that the first pressure bearing section (81) and the second pressure bearing section (91) are subjected to a force, a time node at which conntction between the abutting section (832) and the body wall (7) change from a fixed connection to a sliding connection is earlier than a time node at which the first pressure bearing section (81) and the second pressure bearing section (91) are separated.

9. The battery box beam according to claim 7, **characterized in that** the abutting section (832) and the first pressure bearing section (81) extend in an opposite direction.

10. The battery box beam according to claim 7, **characterized in that** an extension line of the supporting section (831) and an extension line of the body wall (7) form a first included angle, the extension line of the supporting section (831) and an extension line of the second extension section (812) form a second included angle, and the first included angle and the second included angle are offset and complementary to each other.

11. A battery box (1), **characterized in that** the battery box (1) comprises:
a rolling assembly (11) enclosing a fixed space (115) for fixing a cell module (5), the cell module (5) has a tendency to expand along a first direction, the rolling assembly (11) comprises two anti-expansion beams (112) disposed opposite to each other, the two anti-expansion beams (112) are oppositely spaced along the first direction, and each of the two anti-expansion beams (112) is the battery box beam according to any one of claims 1 to 10.

12. The battery box (1) according to claim 11, **characterized in that** the first direction intersects with a second direction, and the rolling assembly (11) further comprises:
two rolled edge beams (111) that are oppositely disposed in the second direction, two ends of each anti-expansion beam (112) are connected with the two rolled edge beams (111) respectively to define the fixed space (115);
preferably both of the two rolled edge beams (111) are the battery box beams, the two rolled edge beams (111) have a same thickness, and a thickness of each of the two rolled edge beams (111) is smaller than a thickness of the anti-expansion beam (112).

13. The battery box (1) according to claim 11, **characterized in that** the rolling assembly (11) further comprises:
at least one first cross beam (113) and at least one second cross beam (114), both of the first cross beam (113) and the second cross beam (114) are located in the fixed space (115), the first cross beam (113) and the second cross beam (114) are cross-connected, two ends of the first cross beam (113) are respectively welded to the two rolled edge beams (111), and two ends of the second cross beam (114) are respectively connected to the two anti-expansion beams (112);
preferably the two ends of the second cross beam (114) are welded to two of the anti-expansion beams (112), respectively.

14. The battery box (1) according to claim 12, **characterized in that** the battery box (1) further comprises a first frame (12), each of two ends of the first frame (12) is respectively connected with one end of each of the two rolled edge beams (111), the first frame (12) is spaced apart from one of the two anti-expansion beams (112) close to the first frame (12) to define an anti-extrusion area (121), a plurality of anti-extrusion beams (13) are disposed at intervals within the anti-extrusion area (121), and two ends of each of the plurality of anti-extrusion beams (13) are respectively connected with the first frame (12) and the anti-expansion beam (112) close to the first frame (12); and
preferably the battery box (1) further comprises a second frame (14), the second frame (14) is disposed opposite to the first frame (12), each of two ends of the second frame (14) is respectively connected with each of the two rolled edge beams (111), and the second frame (14) is disposed at a distance of greater than 5 mm from one of the anti-expansion beams (112) close to the second frame (14).

15. A battery module, **characterized in that** the battery module comprises:
a bottom plate (2);
a bottom guard plate (3) disposed on the bottom plate (2);
a liquid cooling plate (4) disposed on the bottom guard plate (3);
the battery box (1) according to any one of claims 11 to 14 is disposed on the liquid cooling plate (4);
a plurality of cell modules (5) disposed in a fixed space (115) of the battery box (1);
a cell contact system (6) disposed on the plurality of cell modules (5);
an insulating layer disposed on one side of the cell contact system (6) away from the plurality of cell modules (5); and
a box cover disposed on the battery module, and the insulating layer is disposed between the box cover and the cell contact system (6).
